# EUROPEAN PATENT APPLICATION

(11) **EP 1 748 436 A2**
(43) Date of publication of application: **31.01.2007**
(21) Application number: 06117414.0
(22) Date of filing: 18.07.2006
(51) Int. Cl.: G11B 20/12, G11B 7/007

(54) **Information storage medium, reproducing method, recording method and recording device**

(30) Priority: 28.07.2005 JP 2005218447
(71) Applicant: KABUSHIKI KAISHA TOSHIBA, Tokyo 105-8001 (JP)
(72) Inventor: Ootera, Yasuaki Toshiba Corp. IP Division, Tokyo 105-8001 (JP); Takazawa, Koji Toshiba Corp. IP Division, Tokyo 105-8001 (JP); Umezawa, Kazuyo Toshiba Corp. IP Division, Tokyo 105-8001 (JP); Morishita, Naoki Toshiba Corp. IP Division, Tokyo 105-8001 (JP); Morita, Seiji Toshiba Corp. IP Division, Tokyo 105-8001 (JP); Ando, Hideo Toshiba Corp. IP Division, Tokyo 105-8001 (JP)
(74) Representative: Henkel, Feiler & Hänzel

(57) **Abstract**

According to one embodiment, a disc-shape information storage medium in which a recording mark is formed by a laser beam and light reflectance of a recording mark portion formed by the laser beam is higher than light reflectance before a recording mark formation, comprising a management information area (21) which is located at an inner periphery of the information storage medium and records a radial management information pattern, and wherein the radial management information pattern is recorded by an unrecorded portion (22) and a remaining area of the management information area other than the radial management information pattern is a recorded portion.

## Description

One embodiment of the invention relates to a disc-shaped information storage medium such as CD, DVD, BD (Blu-Ray Disc©) or HD DVD. Another embodiment of the invention relates to an optical disc device that reproduces management information from a plurality of grooves formed in a concentric management information area or a plurality of marks recorded in the concentric management information area.

Optical discs such as DVD (Digital Versatile Disc) are provided with an area which is called as BCA (Burst Cutting Area) on which a bar code type pattern is recorded. For example, a technique such that a modulated signal corresponding to a bar code type pattern is synchronized with a signal from a disc rotary motor and a bar code type pattern is recorded on a disc is proposed (see Jpn. Pat. Appln. KOKAI Publication No. 2004-152429).

According to the technique described in this document, a reflection film of a read-only disc is burned off by a laser, a phase of a phase change recording disc is changed by a laser, or dye of a dye recording disc is changed by a laser, so that an exclusive BCA recording device records bar code type BCA patterns.

Rewritable type or recordable (write once) type HD DVDs adopt "Low to High" (L-H) type discs in which the reflectance of a recording mark becomes higher than that of an unrecorded portion. In the case of the L-H type discs, when BCA patterns are recorded thereon similarly to conventional H-L type discs, the polarity of the BCA reproduction signal is reversed to that of conventional H-L type CDs and DVDs.

It is an object of the present invention to provide an information storage medium in which a BCA pattern is inverted with respect to L-H type discs.

It is another object of the present invention to provide an optical disc device in which when BCA is recorded on an L-H type disc, a BCA pattern is inverted to be recorded and the polarity of a BCA reproduction signal is made to be the same as that of an H-L type disc.

The invention can be more fully understood from the following detailed description when taken in conjunction with the accompanying drawings, in which:
FIGS. 1A, 1B, 1C, 1D, 1E, 1F, and 1G are exemplary diagrams illustrating examples of contents of BCA information recorded in a burst cutting area BCA;
FIG. 2 is an exemplary view illustrating conventional BCA and a BCA pattern;
FIGS. 3A and 3B are exemplary views of reproduction signals from the burst cutting area BCA;
FIG. 4 is an exemplary view illustrating BCA and a BCA pattern in an optical disc (read-only optical disc, write once optical disc, or rewritable optical disc) as one example of an information storage medium of the present invention;
FIG. 5 is an exemplary view illustrating a flow of a method of manufacturing a write once optical disc;
FIG. 6 is an exemplary diagram illustrating a schematic constitution of a BCA recording device (management information recording device);
FIG. 7 is an exemplary diagram illustrating a schematic constitution of an optical disc device for reproducing a BCA pattern (management information) recorded in BCA of an optical disc OD;
FIG. 8 is an exemplary view for explaining a movement of a beam spot in BCA;
FIG. 9 is an exemplary flowchart for explaining a reproducing method for reproducing the BCA pattern (management information) recorded in BCA of the optical disc OD; and
FIG. 10 is an exemplary view for explaining a reproduction signal after the reproduction signal obtained from BCA is subject to a filtering process.

Various embodiments according to the invention will be described hereinafter with reference to the accompanying drawings. In general, according to one embodiment of the invention, a disc-shape information storage medium in which a recording mark is formed by a laser beam and light reflectance of a recording mark portion formed by the laser beam is higher than light reflectance before a recording mark formation, comprising a management information area which is located at an inner periphery of the information storage medium and records a radial management information pattern, and wherein the radial management information pattern is recorded by an unrecorded portion and a remaining area of the management information area other than the radial management information pattern is a recorded portion.

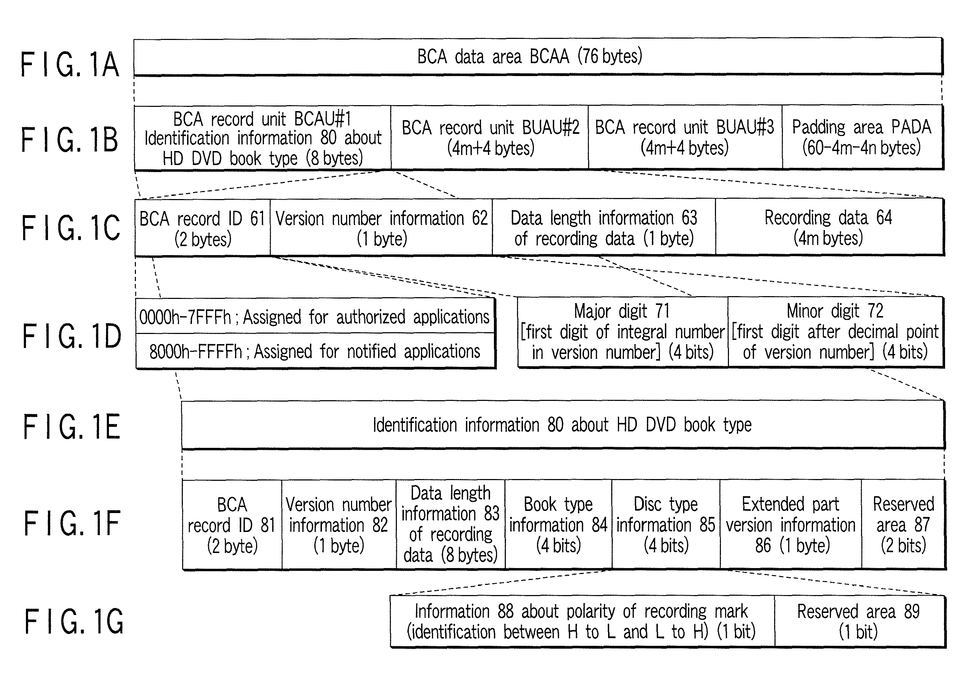

FIGS. 1A to 1G are diagrams illustrating examples of the contents of BCA information recorded in a burst cutting area BCA.

The BCA information shown in FIGS. 1A to 1G is previously recorded as bar code patterns on an inner periphery portion of an optical disc, and has the following data structure. As shown in FIGS. 1A and 1B, information of 76 bytes can be recorded in a BCA data area BCAA, and data are recorded on a BCA record unit BCAU basis. Information to be recorded in the BCA record unit BCAU is called as BCA record. The size of each BCA record is the integral multiple of 4 bytes. In each BCA record, as shown in FIG. 1C, a BCA record ID 61 composed of 2 bytes, version number information 62 composed of 1 byte, data length information 63 of recording data composed of 1 byte, and a data record of 4m bytes (recording data 64) are sequentially recorded. As to ID which is set for the BCA record ID 61, 0000h to 7FFFh are assigned for authorized applications, and 8000h to FFFFh are assigned for notified applications, as shown in FIG. 1D. The version number information 62 composed of 1 byte is divided into a major digit 71 of higher 4 bits and a minor digit 72 of lower 4 bits. The first digit of the integral number in a version number is recorded as the major digit number 71, and the first digit after the decimal point of the version number is recorded as the minor digit 72. For example, in the case of version "2.4", "2" is recorded as the major digit 71, and "4" is recorded as the minor digit 72.

As shown in FIG. 1E, identification number 80 of HD DVD book type is recorded in the BCA record. Specifically, as the contents of the information, a BCA record ID 81, version number information 82 and data length information 83 of recording data are recorded as shown in FIG. 1F. At the same time, book type information 84 composed of 4 bits, disc type information 85 composed of 4 bits, extended part version information 86 (1 byte) and a reserved area 87 (2 bytes) are recorded. Mark polarity (identification of H-L or L-H) information 88 of a recording mark is arranged on higher 1 bit in the disc type information 85.

In optical discs such as CD, DVD, BD and HD DVD, disc-specific information shown in FIGS. 1A to 1G is previously recorded as a bar code type (radial) pattern (BCA pattern) on an inner periphery of a disc. When BCA marked with such a bar code type pattern is recorded on the disc, a method of marking a bar code type pattern in BCA onto a stamper to be a mold at the time of shape-forming an optical disc is used.

In order to record individual specific information on discs one by one, however, it is necessary to mark the BCA pattern on manufactured discs by using a laser, for example. Normally in the case where BCA is recorded in a read-only disc, a pattern is formed by burning off a metal reflection film with a laser beam. Further, in the case where BCA is recorded on a phase change recording disc or an organic dye write once disc, a property of a recording layer is changed by a laser beam and reflectance is changed to form a pattern.

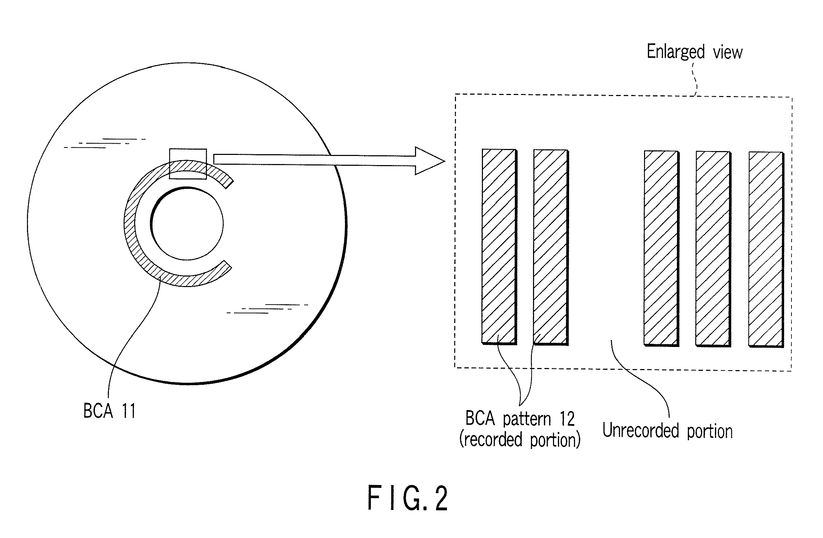

FIG. 2 is a view illustrating conventional BCA and a BCA pattern.

Most conventional H-L type discs such as DVD are provided with a burst cutting area BCA 11 on their inner peripheries. An enlarged view of the BCA 11 illustrates a bar code type BCA pattern 12. The BCA pattern 12 is marked by a recorded portion, and the polarity of a reproduction signal in the recorded portion is at L (Low) level. A portion other than the recorded portion is an unrecorded portion where recording is not performed, and the polarity of a reproduction signal in the unrecorded portion is at H (High) level. The BCA 11 is formed of the recorded portion (L level) composed of a BCA pattern 12, and the unrecorded portion (H level) other than the BCA pattern 12.

When a BCA signal is written into the recording disc, the signal to be reproduced changes according to whether the recording medium is a Low to High disc or a High to Low disc even if the same pattern is written. The polarity of the BCA reproduction signal is defined as L-H type in the case of HD DVD. BCA should be recorded with the reproduction polarity being matched with this definition. In this case, on the contrary to the conventional general BCA pattern in FIG. 2, BCA should be recorded with the pattern not being recorded but being maintained unrecorded.

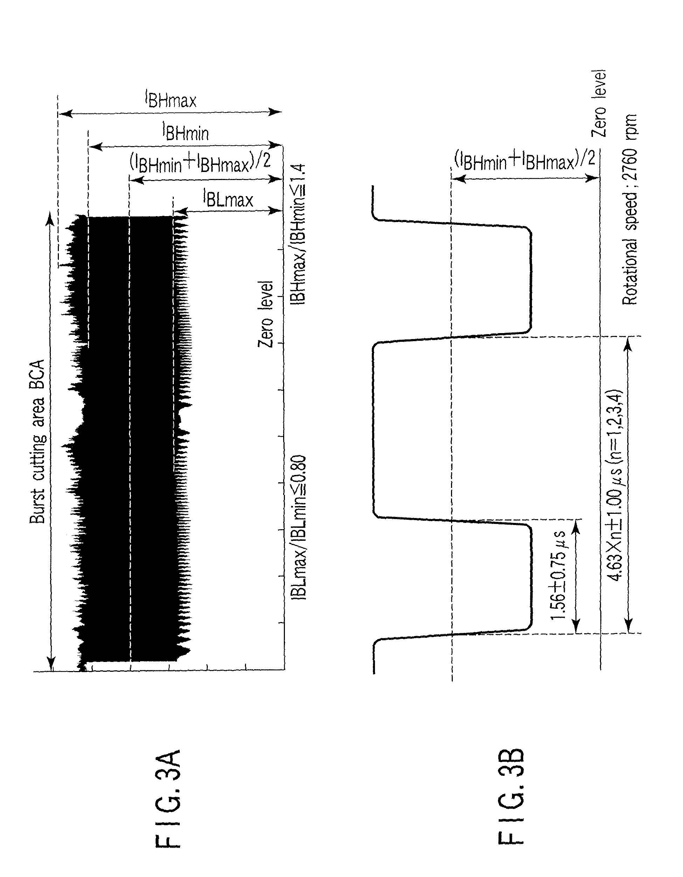

The definition of the reproduction signal from BCA in HD DVD will be explained below with reference to FIGS. 3A and 3B. It is necessary that a focused spot of a laser beam emitted from an optical head is focused on a recording layer at the time of measuring the BCA signal. The reproduction signal obtained from the burst cutting area BCA is filtered by a secondary low-pass Bessel filter whose cutoff frequency is 550 kHz. The following signal specification of BCA between radiuses of 22.3 mm to 23.1 mm from the center of the optical disc is defined. The reproduction signal from BCA has a waveform of FIG. 3A, and the maximum and minimum levels of a channel bit "0" of the BCA code are defined as IBHmax and IBHmin. The maximum bottom level of a channel bit "1" of the BCA code is defined as IBLmax. The intermediate level is defined as (IBHmin + IBLmax)/2.

In this embodiment, the feature of each detected signal is a condition where (IBLmax/IBHmin) is 0.8 or less and a condition where (IBHmax/IBHmin) is 1.4 or less. FIG. 3B shows a cycle signal of the BCA code and the channel bit. An average level of IBL and IBH is used as a reference, and a position where the BCA signal crosses the reference position is regarded as an edge position. The cycle of the BCA signal is defined when the rotational speed is 2760 rpm (46.0 Hz). As shown in FIG. 3B, the cycle of a head edge (trailing position) is 4.63 × n ± 1.00 µs, and the width of a pulse position in a place where a light amount reduces (an interval between a trailing position and a next rising position) is 1.56 ± 0.75 µs.

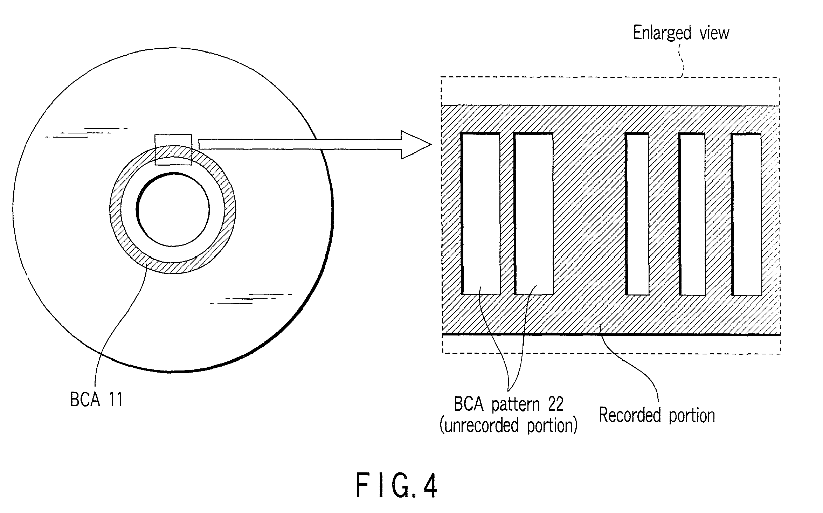

FIG. 4 is a view illustrating BCA and a BCA pattern in an optical disc (read-only disc, write once optical disc, and rewritable disc) as one example of the information storage medium of the present invention.

A disc of a next-generation DVD (for example, HD DVD) is always provided with a BCA 21 on its inner periphery. The enlarged view of the BCA 21 shows a bar code type BCA pattern 22. The BCA pattern 22 is an unrecorded portion where recording is not performed, and when BCA is reproduced, the polarity of a reproduction signal in the unrecorded portion is at L (low) level. A portion other than the unrecorded portion is a recorded portion where recording is performed, and the polarity of a reproduction signal in the recorded portion is at H (High) level. The BCA 21 in this embodiment is formed by the unrecorded portion (L level) composed of the BCA pattern 22, and the recorded portion (H level) other than the BCA pattern.

When the BCA 21 is recorded according to this embodiment, recording is performed entirely along the periphery of the disc on the portion other than the unrecorded portion composed of the BCA pattern 22. More specifically, when recording is performed entirely along the periphery of the disc (recorded portion is formed), BCA is reproduced along the periphery of the disc with the disc being rotated. For this reason, misreading of the BCA pattern 22 can be avoided. In addition to this effect, particularly in the write once disc, illegal BCA pattern cannot be additionally written after recording is once performed entirely along the portion other than the BCA pattern. As a result, the effects such that illegal copying is prevented and fraud of disc type is prevented can be expected.

In this embodiment, it is assumed that the optical disc is the write once disc, which has a diameter of 120 mm and a thickness of 1.2 mm (two polycarbonate molding substrates of 0.6 mm are laminated), and that BCA is formed in a donut shape area with radius of 22.3 to 23.1 mm. In this embodiment, the contents shown in FIGS. 1A to 1G can be recorded in BCA, and the BCA pattern is generally a bar code type pattern whose width (tangential direction) is several dozens µm and length (radial direction) is several hundreds µm.

As the recording layer, an organic dye material (for example, azo-based, diazo-based, cyanine-based, phthalocyanine-based, styryl-based or a mixed substance of them), an inorganic phase change material (for example, GeSbTe-based or AgIn-based), or the like is used. In general, a molding substrate is made of polycabonate, a reflection film is made of silver (Ag), aluminum (Al), gold (Au) or a Ag, Al or Au-based metallic compound, and an adhesive is made of acrylic or epoxy UV curable resin. The recording and reproducing in/from the optical disc adopts a wavelength of 405 nm as recording/reproducing light, and adopts an optical system with NA of 0.65. This embodiment is not limited to these specifications.

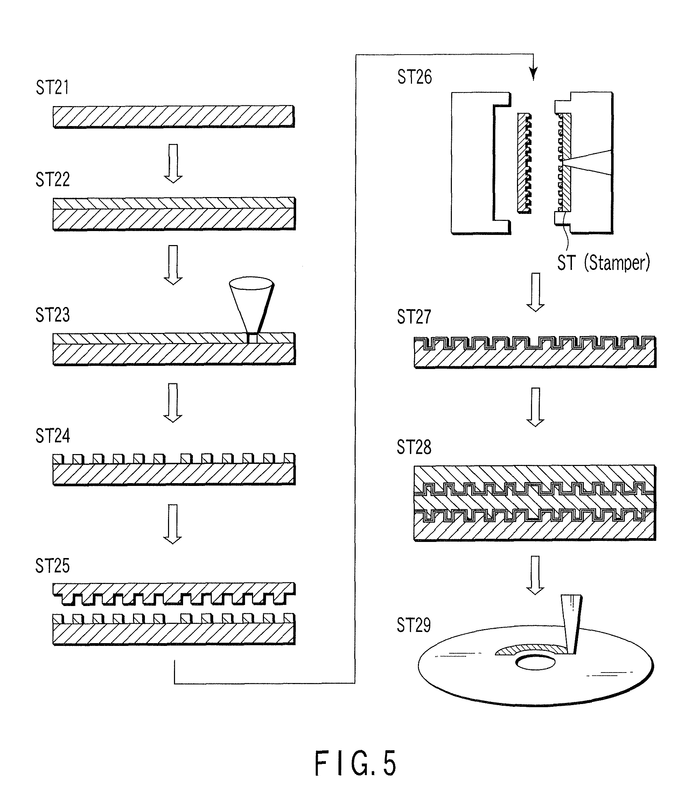

The flow of the method of manufacturing the write once optical disc will be explained with reference to FIG. 5. Glass whose surface is polished and rinsed is used as a master board (ST21). Photoresist is applied to the surface of the master board (ST22), and the surface is exposed to a laser beam or the like, so that information is recorded (ST23). The exposed master board is developed, and concavity and convexity of pits and grooves are formed (ST24). Thereafter, the master board is subject to a plating process, so that a stamper (the material is generally nickel) is created (ST25). A resin (material is generally polycarbonate) molding plate is created by injection molding using the stamper as a mold (S26). A recording layer and a reflection layer (in the case of the read-only disc, only reflection layer) are formed on the created molding substrate by a sputtering method, a spin-coating method or the like (ST27). One more molding substrate is prepared so as to be laminated via an adhesive (ST28). A disc-specific bar code type BCA pattern is recorded in the BCA area of the laminated disc by a BCA recording device (ST29). As a result, the optical disc is completed.

The BCA recording device used in the BCA recording step (ST29) has a constitution such that a BCA pattern is recorded by a large beam spot by use of a higher output laser than that of optical disc recording devices in the market in order to record a large BCA mark with several dozens µm order.

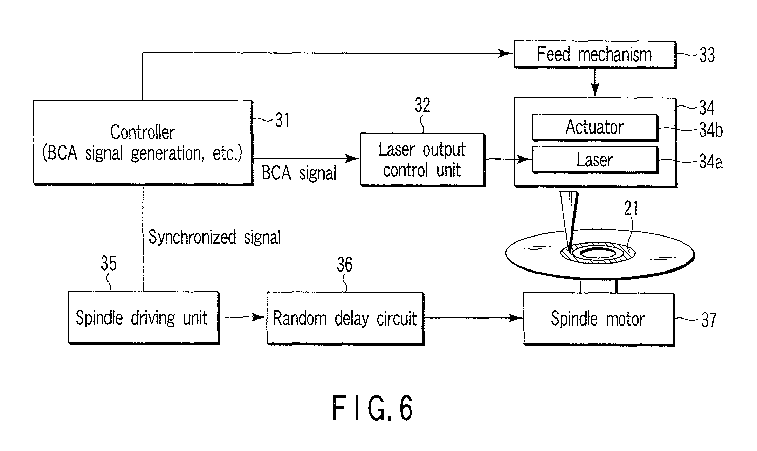

FIG. 6 explains the schematic constitution of the BCA recording device (management information recording device). As shown in FIG. 6, the BCA recording device has a controller 31, a laser output control unit 32, a feed mechanism 33, an optical head 34, a spindle driving unit 35, a random delay circuit 36 and a spindle motor 37.

The controller 31 generates a BCA signal corresponding to a BCA pattern, a control signal to the feed mechanism 33, and a synchronizing signal to the spindle driving unit 35. The controller 31 transmits the BCA signal to the laser output control unit 32 such that the recorded portion corresponds to an area other than the BCA pattern 22 as shown in FIG. 4. The controller 31 turns off a laser beam on the portion of the BCA pattern 22, and turns on the laser beam on the BCA 21 other than the BCA pattern 22. The laser output control unit 32 controls driving of the laser 34a included in the optical head 34 based on the BCA signal. The laser 34a emits a laser beam corresponding to the area other than the BCA pattern 22. The feed mechanism 33 moves the optical head 34 in a radial direction of the disc based on a feed mechanism control signal. An actuator 34b included in the optical head 34 finely adjusts an emitting position of the beam spot to be emitted from the laser 34a.

The spindle driving unit 35 generates a spindle driving signal based on the synchronizing signal. The random delay circuit 36 adds a random delay component to the spindle driving signal. The spindle motor 37 rotates based on the spindle driving signal containing the random delay component, and the rotation of the spindle motor 37 allows the optical disc to rotate. As a result, the BCA 21 shown in FIG. 4 can be formed on the disc.

When the BCA is recorded on the L-H type disc, the BCA pattern is inverted to be recorded, and the polarity of the BCA reproduction signal is corrected. Further, at this time, recording is performed entirely over a portion in the BCA area where the BCA pattern is not present, so that the reflectance is made to be at H level. As a consequence, illegal copying and fraud of media type due to misreading of the BCA pattern and illegal additional writing in the BCA by another person can be prevented.

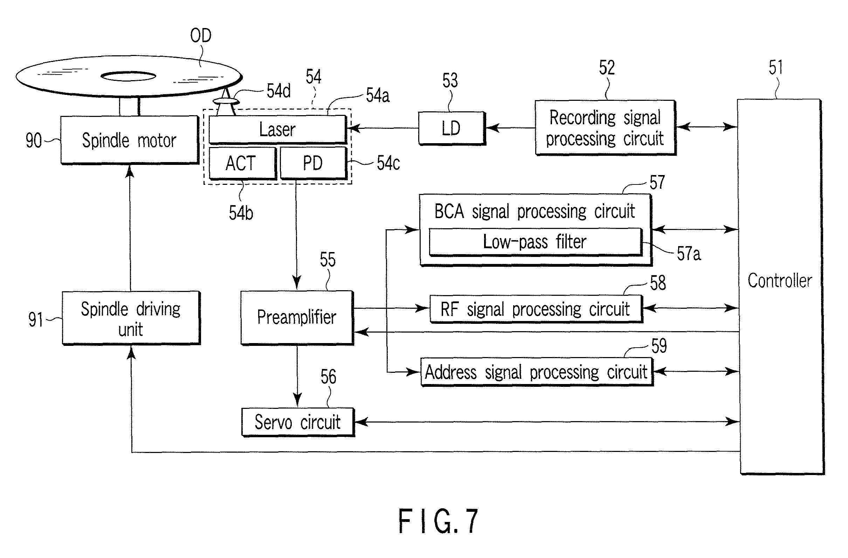

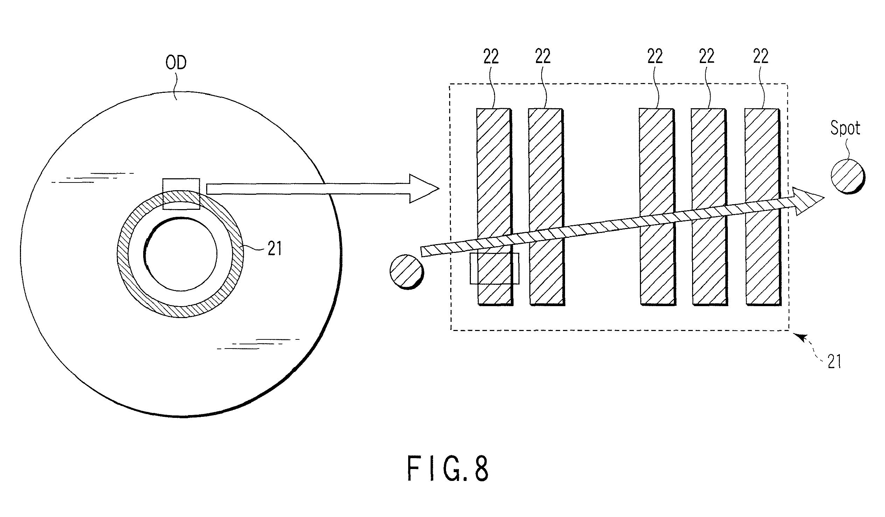

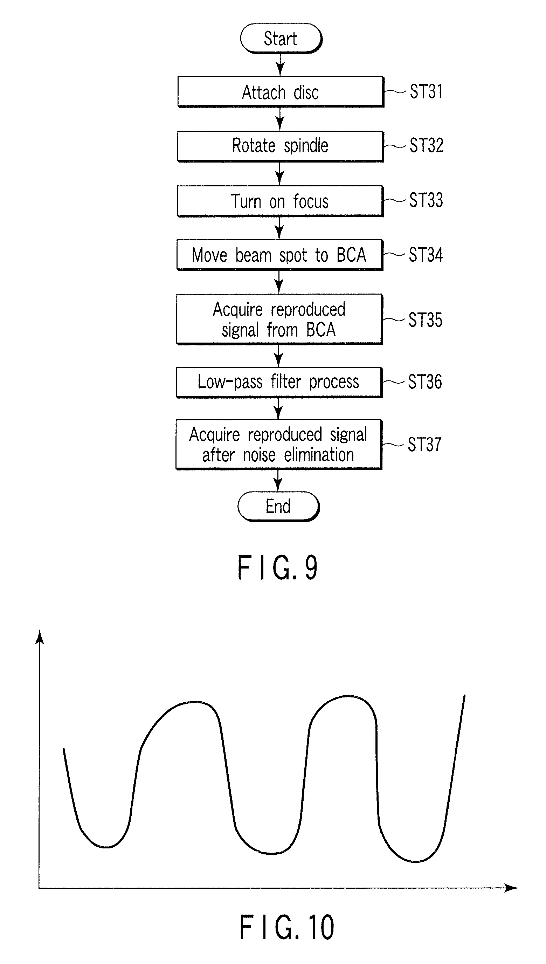

With reference to FIGS. 7 to 10, the reproduction of the BCA pattern (management information) recorded in the BCA of the optical disc OD will be explained. FIG. 7 is a diagram illustrating a schematic constitution of the optical disc device for reproducing the BCA pattern (management information) recorded in the BCA of the optical disc OD. FIG. 8 is a view for explaining the movement of the beam spot in the BCA. FIG. 9 is a flowchart for explaining the reproducing method for reproducing the BCA pattern (management information) recorded in the BCA of the optical disc OD. FIG. 10 is a view for explaining the reproduction signal after the reproduction signal obtained from the BCA is subject to a filtering process.

As shown in FIG. 7, the optical disc device has a controller 51, a recording signal processing circuit 52, a laser driver (LD) 53, an optical pickup head (PUH) 54, a preamplifier 55, a servo circuit 56, a BCA signal processing circuit 57, an RF signal processing circuit 58, an address signal processing circuit 59, a spindle motor 90 and a spindle driving unit 91. The optical pickup head (PUH) 54 has a laser (laser light source) 54a, an actuator (ACT) 54b, a photodetector (PD) 54c and an objective lens 54d.

When information is recorded in a user area, the controller 51 outputs a recording signal, and the recording signal processing circuit 52 modulates the recording signal. The laser driver (LD) 53 drives the laser 54a based on the modulated recording signal. That is, the laser 54a emits a laser beam corresponding to the recording signal. Consequently, the laser beam is emitted to the optical disc OD via the objective lens 54d (NA: 0.85 to 0.45), so that the information is recorded.

When information is reproduced, the laser driver (LD) 53 drives the laser 54a. As a result, the laser 54a emits a laser beam for reproduction. Due to the emission of the laser beam, reflected light reflected from the optical disc OD is detected by the photodetector 54c. The photodetector 54c outputs a reflected light component as an electric signal. The photodetector 54c is composed of a plurality of photodetecting elements (for example, four photodetecting elements). A signal which is obtained by adding signal components detected by the respective photodetecting elements is called as a sum signal, and a signal which is obtained in a manner that signal components detected by some photodetecting elements are reduced by signal components detected by the other photodetecting elements is called as a difference signal. The preamplifier 55 amplifies an electric signal output from the photodetector 54c.

The servo circuit 56 generates a servo signal based on a servo control signal from the controller 51 and the electric signal detected by the photodetector 54c and amplified by the preamplifier. The actuator (ACT) 54b controls focus, tracking and tilt based on the servo signal.

The BCA signal processing circuit 57 processes the electric signal (sum signal) detected by the photodetector 54c and amplified by the preamplifier so as to reproduce the BCA pattern. The BCA signal processing circuit 57 has a low-pass filter 57a, and the low-pass filter 57a eliminates a noise of a high frequency component. The RF signal processing circuit 58 processes the electric signal (sum signal) which is detected by the photodetector 54c and is amplified by the preamplifier so as to reproduce contents information. The address signal processing circuit 59 processes the electric signal (sum signal) which is detected by the photodetector 54c and is amplified by the preamplifier so as to reproduce physical address information.

As shown in FIG. 8, at the time of reproducing the BCA, the tracking control of the beam spot of the reproducing light is turned off. The beam spot of the reproducing light, therefore, passes obliquely through the BCA pattern 22 in the BCA 21. Accordingly, the reproduction signal obtained directly from the BCA 21 contains the signal component of the BCA pattern 22 and further a very low signal from the gap between the patterns as a noise. The low-pass filter 57a of the BCA signal processing circuit 57 shown in FIG. 7 eliminates the noise.

The process of reproducing the BCA pattern will be explained with reference to FIG. 9. First, the optical disc OD is mounted (ST31), the spindle motor 37 rotates (ST32), the focus is turned on (ST33), and the beam spot moves to the BCA (ST34). As a result, the reproduction signal from the BCA is obtained (ST35), and the low-pass filter process is executed(ST36), so that the reproduction signal from which the noise of the high frequency component has been eliminated as shown in FIG. 10 is obtained (ST37). Since the noise of the high frequency component is eliminated, the BCA can be accurately reproduced.

As described above, this embodiment is the information storage medium where the recording mark is formed by the emission of a laser beam and the light reflectance of the recording mark portion formed by the emission of the laser beam is higher than light reflectance before the emission of the laser beam. In the information storage medium, the management information area which stores radial management information therein is provided to its inner periphery, the radial pattern is in the unrecorded state, and the management information area other than the radial pattern is in the recorded state.

According to this embodiment, when the BCA is recorded on the L-H type disc, the BCA pattern is inverted to be recorded, so that the polarity of the BCA reproduction signal is corrected. At this time, recording is performed along the entire portion in the BCA where the BCA pattern is not present, so that the reflectance is made to be at H (High) level. This makes it possible to prevent the illegal copying and fraud of media type due to the misreading of the BCA pattern and illegal additional writing of the BCA by another person.

## Claims

1. A disc-shape information storage medium in which a recording mark is formed by a laser beam and light reflectance of a recording mark portion formed by the laser beam is higher than light reflectance before a recording mark formation, **characterized by** comprising:
a management information area (21) which is located at an inner periphery of the information storage medium and records a radial management information pattern, and wherein
the radial management information pattern is recorded by an unrecorded portion (22) and a remaining area of the management information area other than the radial management information pattern is a recorded portion.

2. The information storage medium according to claim 1, **characterized in that** a polarity of a reproduction signal from the unrecorded portion is at L level and a polarity of a reproduction signal from the recorded portion is at H level.

3. The information storage medium according to claim 1, **characterized in that** the remaining area of the management information area other than the radial management information pattern is a recorded portion which is recorded along an entire circumference of the information storage medium.

4. A reproducing method for reproducing information recorded in a disc-shape information storage medium in which a recording mark is formed by a laser beam and light reflectance of a recording mark portion formed by the laser beam is higher than light reflectance before a recording mark formation, which comprises a management information area which is located at an inner periphery of the information storage medium and records a radial management information pattern, and wherein the radial management information pattern is recorded by an unrecorded portion and a remaining area of the management information area other than the radial management information pattern is a recorded portion, the method **characterized by** comprising:
emitting a laser beam to the information storage medium; and
reproducing the information based on reflected light of the laser beam.

5. A recording method for recording information in a disc-shape information storage medium in which a recording mark is formed by a laser beam and light reflectance of a recording mark portion formed by the laser beam is higher than light reflectance before a recording mark formation, which comprises a management information area which is located at an inner periphery of the information storage medium and records a radial management information pattern, and wherein the radial management information pattern is recorded by an unrecorded portion and a remaining area of the management information area other than the radial management information pattern is a recorded portion, the method **characterized by** comprising:
emitting a laser beam to the information storage medium; and
recording the information.

6. A recording apparatus for recording information in a disc-shape information storage medium in which a recording mark is formed by a laser beam and light reflectance of a recording mark portion formed by the laser beam is higher than light reflectance before a recording mark formation, which comprises a management information area which is located at an inner periphery of the information storage medium and records a radial management information pattern, and wherein the radial management information pattern is recorded by an unrecorded portion and a remaining area of the management information area other than the radial management information pattern is a recorded portion, the apparatus **characterized by** comprising:
a light source (34) which emits a laser beam; and
a controller (31) which controls emission of the laser beam from the light source, dose not emit the laser beam for the radial management information pattern, and emits the laser beam for the management information area other than the radial management information pattern.
